Europäisches Patentamt

European Patent Office (11) Publication number: **0 304 059**

Office européen des brevets **A1**

(12) **EUROPEAN PATENT APPLICATION**

(21) Application number: **88113440.7**

(22) Date of filing: **18.08.88**

(51) Int. Cl.⁴: **B29C 45/26 , B29C 45/73**

(30) Priority: **20.08.87 JP 207217/87**

(43) Date of publication of application:
**22.02.89 Bulletin 89/08**

(84) Designated Contracting States:
**DE NL**

(71) Applicant: **Fuji Photo Film Co., Ltd.**
**210 Nakanuma Minamiashigara-shi**
**Kanagawa-ken(JP)**

(72) Inventor: **Ishiguro, Masanori**
**2-12-1 Oogi-cho**
**Odawara-shi Kanagawa-ken(JP)**

(74) Representative: **Patentanwälte Grünecker,**
**Kinkeldey, Stockmair & Partner**
**Maximilianstrasse 58**
**D-8000 München 22(DE)**

(54) **Injection mold for spool.**

(57) A film spool (1) for winding a photographic film
has a recess (1a, 1b) formed in an axial end face
thereof and a rib portion (2, 3) for rewind or the like
is formed in the recess. The part of an injection
mold defining the recess in the axial end face of the
spool is formed of a telescopic member (31a, 31b)
which is of material having a high thermal conductivity, and a heat pipe (33a, 33b) is provided to extend
through the telescopic member near to the part
defining the rib portion at one end and to project into
a cooling channel (34a, 34b) at the other end.

FIG.1

EP 0 304 059 A1

## INJECTION MOLD FOR SPOOL

### BACKGROUND OF THE INVENTION

#### Field of the Invention

This invention relates to an injection mold for injection-molding a spool having a rib portion in a recess formed in an axial end face thereof.

#### Description of the Prior Art

A film spool for winding a photographic film has a recess formed in an axial end face thereof and a rib portion for rewind or the like is formed in the recess. In an injection mold for molding such a spool, the portion for defining the recess in the axial end face is complicated in shape and relatively small in size and accordingly, it is impossible to form a cooling channel through the portion. Therefore, a long cooling time has been required in order to sufficiently cool the rib portion which is hardest to solidify, thereby preventing generation of sink mark, deformation or the like at the rib portion. This is not preferable from the viewpoint of the manufacturing cost.

### SUMMARY OF THE INVENTION

In view of the foregoing observations and description, the primary object of the present invention is to provide an injection mold for such spools which can shorten the cooling time without adversely affecting the quality of the article.

The mold in accordance with the present invention is characterized in that the part of the mold defining the recess in the axial end face is formed of a telescopic member which is of material having a high thermal conductivity, and a heat pipe is provided to extend through the telescopic member near to the part defining the rib portion at one end and to project into a cooling channel at the other end.

As the material having a high thermal conductivity, beryllium-copper alloy can be used, for instance, though need not be limited to it.

The cooling channel may be formed in the telescopic member or in other parts in the mold.

Fluid in the heat pipe is evaporated by the heat of the part defining the rib portion at one end, thereby receiving heat therefrom and is condensed by the coolant flowing through the cooling channel at the other end, thereby delivering heat to the coolant. Thus the heat pipe effectively transfers heat of the part defining the rib portion to the coolant and since the telescopic member has a high thermal conductivity, the whole telescopic member and the resin forming the rib portion are effectively cooled and the resin is effectively solidified.

### BRIEF DESCRIPTION OF THE DRAWINGS

Figure 1 is a cross-sectional view of an injection mold in accordance with an embodiment of the present invention,

Figure 2 is a side view partly in cross-section of a spool molded by the mold shown in Figure 1,

Figure 3 is a view for illustrating deformation of the rib portion, and

Figures 4 and 5 are views for illustrating the result of the invention.

### DESCRIPTION OF THE PREFERRED EMBODIMENT

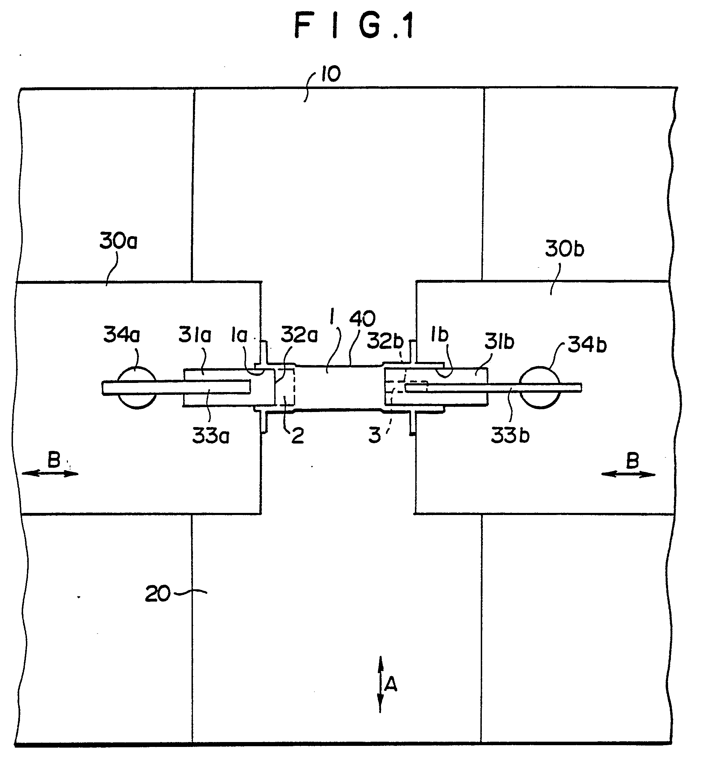

An injection mold for a spool 1 in accordance with an embodiment of the present invention comprises a cavity block 10, a core 20 and a pair of slide cores 30a and 30b as shown in Figure 1. The core 20 is moved back and forth relative to the cavity block 10 as shown by arrow A and the slide cores 30a and 30b are moved back and forth relative to the core 20 transversely to the moving direction of the core 20 as shown by arrow B. When the injection mold is closed, a cavity 40 conforming to the shape of the spool 1 is defined and by injecting molten resin into the cavity 40 in the known manner, the spool 1 is molded.

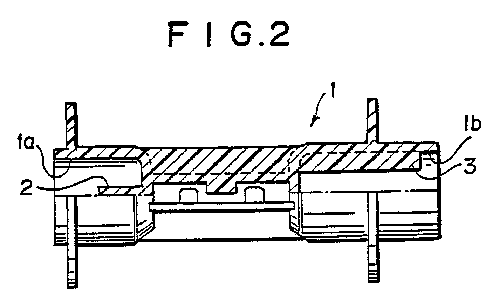

As shown in Figure 2, the spool 1 is for winding a photographic film therearound and is provided with cylindrical recesses 1a and 1b on opposite end portions. The recess 1a is shallower than the recess 1b and a rib 2 projects from the bottom of the recess 1a in the longitudinal direction of the spool 1 and connects diametrically opposed portions of the side wall of the recess 1a. A pair of ribs 3 project from the bottom of the recess 1b in parallel to the longitudinal axis of the spool 1. One of the side edges of each rib 3 is connected to the side wall of the recess 1b and the other side edges of the respective ribs 3 are diametrically opposed to each other. The ribs 3 are in a plane perpendicular to the plane in which the rib 2 extends.

As shown in Figure 1, the slide cores 30a and 30b are respectively provided with slide core pins 31a and 31b which are respectively for forming the recesses 1a and 1b and are in the form of telescopic members fixed to the respective slide cores 30a and 30b. The slide core pins 31a and 31b are formed of beryllium-copper alloy (Be-Cu). The slide core pins 31a and 31b are respectively provided with slits 32a and 32b for forming the ribs 2 and 3. Further, one ends of heat pipes 33a and 33b are respectively inserted into the slide core pins 31a and 31b along the longitudinal axis of the respective slide core pins 31a and 31b.

Said one end of the heat pipe 33a extends near to the slit 32a and the other end of the heat pipe 33a extends into a cooling channel 34a formed in the slide core 30a. Said one end of the heat pipe 33b extends near to the slits 32b and the other end of the heat pipe 33b extends into a cooling channel 34b formed in the slide core 30b. Thus said the other ends of the respective heat pipes 33a and 33b are cooled by cooling water flowing through the cooling channels 34a and 34b.

When molten resin is injected into the cavity 40, the temperature of the mold including the slide core pins 31a and 31b increases. Since cooling water flows through the cooling channel 34a and 34b in the slide cores 30a and 30b, a large temperature difference is produced between opposite ends of each of the heat pipes 33a and 33b, and fluid in the heat pipe is evaporated at one end of each of the heat pipes 33a and 33b, thereby receiving heat therefrom and is condensed by the coolant flowing through the cooling channel at the other end of each of the heat pipes 33a and 33b, thereby delivering heat to the coolant. Thus the heat pipes 33a and 33b effectively cools the slide core pins 31a and 31b, and since the slide core pins 31a and 31 have a high thermal conductivity, the whole slide core pins 31a and 31b are effectively cooled. Further since the heat pipes 33a and 33b extend near to the slits 32a and 32b for forming the ribs 2 and 3, molten resin in the slits 32a and 32b can be effectively cooled and solidified.

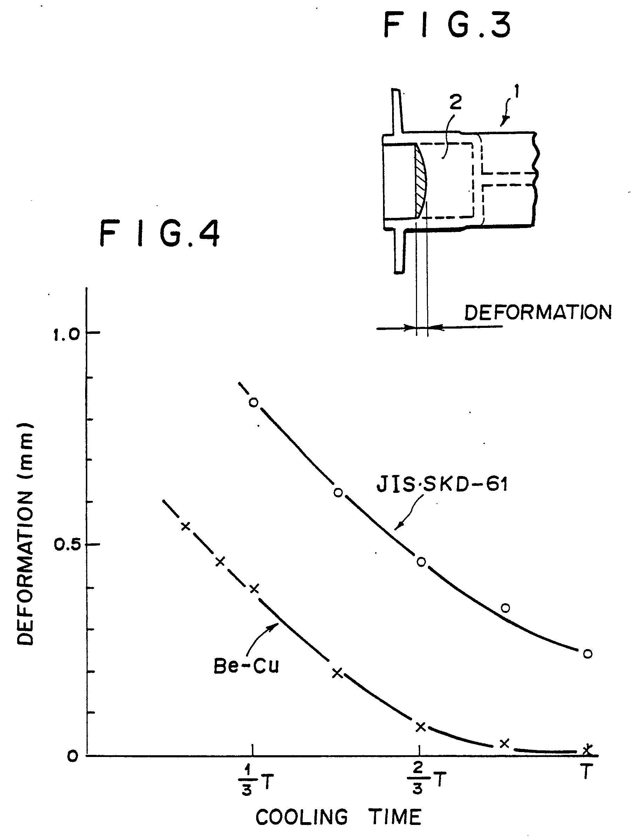

Figure 4 shows the relationship between the deformation of the rib 2 and the cooling time when the slide core pin 31a is formed of dies steel (JIS·SKD-61) as in the conventional mold and when the same is formed of beryllium-copper alloy (Be-Cu). The deformation of the rib 2 is illustrated in Figure 3 and is adopted here because the rib 2 is more apt to be deformed than the rib 3 due to difference in shape.

As can be understood from Figure 4, the deformation of the rib 2 for a given cooling time is substantially reduced when the slide core pin 31a is formed of Be-Cu as compared with when the same is formed of JIS·SKD-61. The thermal conductivity of JIS·SKD-61 is 0.18 cal/cm²·sec.°C and that of Be-Cu is 0.26 - 0.31 cal/cm²·sec.°C.

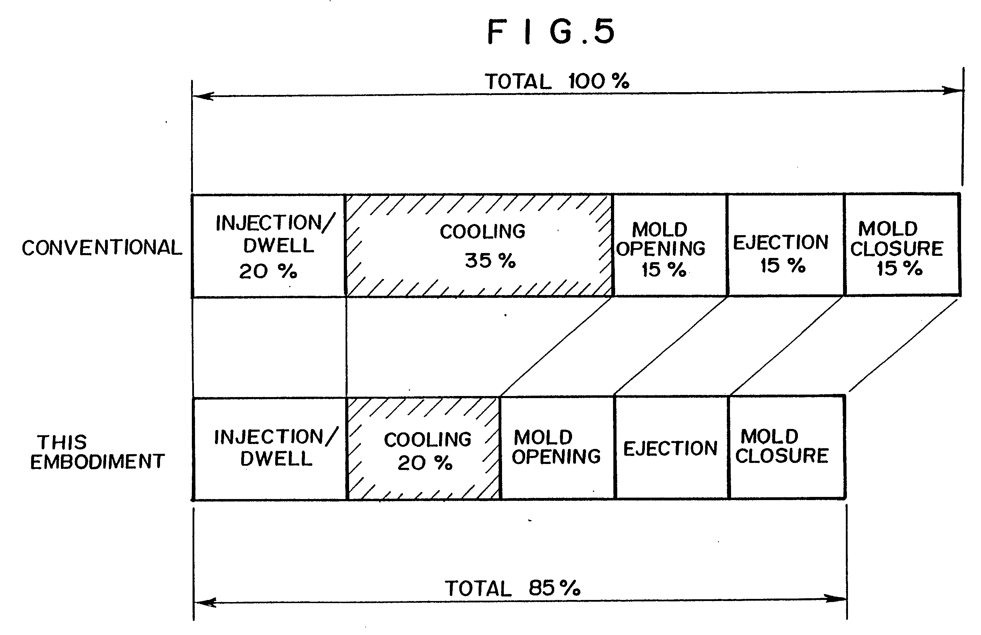

As shown in Figure 5, in accordance with this embodiment, the cooling time which has occupied 35% of the molding cycle can be shortened to 20% of the molding cycle, thereby shortening the molding cycle by 15%.

## Claims

1. An injection mold for molding a spool having a recess formed in an axial end face thereof and a rib portion formed in the recess characterized in that the part of the injection mold defining the recess in the axial end face of the spool is formed of a telescopic member which is of material having a high thermal conductivity, and a heat pipe is provided to extend through the telescopic member near to the part defining the rib portion at one end and to project into a cooling channel at the other end.

2. An injection mold as defined in Claim 1 in which said material having a high thermal conductivity is beryllium-copper alloy.

# F I G .1

# F I G.2

# F I G.3

DEFORMATION

# F I G.4

JIS·SKD−61

Be−Cu

DEFORMATION (mm)

1.0

0.5

0

$\frac{1}{3}$T     $\frac{2}{3}$T     T

COOLING TIME

# F I G . 5

TOTAL 100 %

| | INJECTION/ DWELL 20 % | COOLING 35 % | MOLD OPENING 15 % | EJECTION 15 % | MOLD CLOSURE 15 % |
|---|---|---|---|---|---|
| CONVENTIONAL | | | | | |

| | INJECTION/ DWELL | COOLING 20 % | MOLD OPENING | EJECTION | MOLD CLOSURE |
|---|---|---|---|---|---|
| THIS EMBODIMENT | | | | | |

TOTAL 85 %

EP 0 304 059 A1

## DOCUMENTS CONSIDERED TO BE RELEVANT

EP 88113440.7

| Category | Citation of document with indication, where appropriate, of relevant passages | Relevant to claim | CLASSIFICATION OF THE APPLICATION (Int. Cl.4) |
|---|---|---|---|
| A | US - A - 3 737 502 (REES) <br><br> * Totality * <br><br> ---- | | B 29 C 45/26 <br><br> B 29 C 45/73 |

TECHNICAL FIELDS
SEARCHED (Int. Cl.4)

B 29 C

The present search report has been drawn up for all claims

| Place of search | Date of completion of the search | Examiner |
|---|---|---|
| VIENNA | 31-10-1988 | MAYER |